# FASCICULE DE BREVET EUROPEEN

(11) **EP 0 493 210 B1**
(45) Date de publication et mention de la délivrance du brevet: **05.10.1994**
(21) Numéro de dépôt: 91403459.0
(22) Date de dépôt: 19.12.1991
(51) Int. Cl.: F24J 2/34, F24J 2/40, F24J 2/04, C02F 1/14

(54) **Chauffe-eau solaire ainsi qu'appareil de refroidissement et de climatisation ou de dessalement de l'eau de mer**
Solar-Wärmespeicher und Anlage zur Kühlung und Klimatisierung oder Seewasserentsalzung
Solar water heating and apparatus for cooling and airconditioning or sea-water desalination

(30) Priorité: 21.12.1990 FR 9016119
(43) Date de publication de la demande: 01.07.1992
(73) Titulaire: Djelouah, Myriam, F-45500 Saint Denis de l'Hotel (Loiret) (FR); Djelouah, Nadia, F-45500 Saint Denis de l'Hotel (Loiret) (FR)
(72) Inventeur: Djelouah, Myriam, F-45500 Saint Denis de l'Hotel (Loiret) (FR); Djelouah, Nadia, F-45500 Saint Denis de l'Hotel (Loiret) (FR)
(74) Mandataire: Cabinet HERRBURGER

(56) Documents cités:
- DE-A- 3 222 896
- DE-A- 3 509 601
- FR-A- 2 521 270
- FR-A- 2 536 157
- FR-A- 2 591 323
- US-A- 2 342 201
- US-A- 4 156 420
- US-A- 4 365 615
- US-A- 4 523 576

## Description

La présente invention se rapporte à un appareil solaire.

Ces dernières années, les scientifiques se sont rendu compte que l'énergie solaire présentait l'avantage d'être bon marché et surtout particulièrement "propre" ; la prise en compte croissante des problèmes liés à la protection de l'environnement a eu pour corollaire un développement considérable des recherches en vue d'exploiter de manière optimale cette énergie, et l'on a vu apparaître sur le marché toute une série d'appareils mus par l'énergie solaire, destinés notamment au chauffage ou au refroidissement, et plus particulièrement destinés aux habitants des régions ensoleillées ou tropicales.

Ces appareils sont cependant le plus souvent basés sur l'utilisation de panneaux solaires de grande surface, donc particulièrement volumineux, et leur utilisation se trouve en conséquence limitée à des installations relativement importantes (voir p. ex. les documents US-A- 4 156 420 ou FR-A- 2 521 270).

On a aussi proposé d'appareils solaires de dimensions suffisamment restreintes pour être portables, susceptibles de fournir de l'eau chaude à des utilisateurs tels que des campeurs ou des plaisanciers dans des conditions satisfaisantes (FR-A- 2 536 157).

Un premier objet de la présente invention est de proposer un chauffe-eau solaire de fonctionnement extrêmement simple, et pouvant être dimensionné de façon à être susceptible, suivant les cas, de couvrir les besoins en eau chaude d'une habitation ou d'un ensemble d'habitations, ou, de satisfaire les besoins d'utilisateurs tels que des campeurs ou des plaisanciers.

Selon l'invention, ce chauffe-eau solaire est caractérisé en ce qu'il se compose d'une cellule de chauffage partiellement transparente au rayonnement solaire et comportant à sa partie interne un ensemble de deux enveloppes s'entourant l'une l'autre fermées, à savoir une enveloppe externe en un matériau, notamment une matière plastique transparente au rayonnement solaire et une enveloppe interne en un matériau absorbant ce rayonnement et définissant à sa partie interne une chambre de chauffage pour varier la température ou le volume de stockage ; une conduite d'alimentation de la chambre de chauffage en eau à chauffer ; des moyens permettant de faire varier la capacité de la chambre de chauffage ; un réservoir d'eau chaude revêtu sur sa périphérie d'un matériau isolant et relié à la chambre de chauffage au moyen d'une conduite de chauffage munie d'une vanne commandable de l'extérieur ; un robinet de soutirage d'eau chaude monté à la partie externe du réservoir d'eau chaude et, une conduite d'évacuation de la vapeur éventuellement produite dans la chambre de chauffage, cette conduite d'évacuation étant de préférence munie d'une soupape de sécurité.

Conformément à la configuration susmentionnée, il se crée entre le volume interne (cylindre) et le volume externe (cylindre) un premier effet de serre auquel se superpose un second effet de serre engendré entre la paroi extérieure transparente de la cellule et le cylindre externe ; Il en résulte un échauffement vigoureux du liquide introduit dans la chambre de chauffage par la conduite d'alimentation, échauffement dont on peut encore augmenter l'efficacité en diminuant le volume de la chambre de chauffage. Il ne reste alors plus à l'utilisateur qu'à transférer l'eau chaude dans le réservoir dont est pourvue la cellule avant de la distribuer en manoeuvrant le robinet prévu à cet effet.

Le caractère particulièrement avantageux du chauffe-eau susmentionné est dans une large mesure lié à la configuration particulière des moyens permettant de faire varier la capacité de la chambre de chauffage, qui permet de contrôler l'échauffement de l'eau introduite dans cette chambre.

Selon une caractéristique préférentielle de l'invention, ces moyens sont constitués par un élément de cloisonnement s'étendant longitudinalement dans la chambre de chauffage et sur lequel est fixé un soufflet coopérant avec une tige coulissante réglable pouvant être manoeuvrée de l'extérieur pour faire varier le volume de ce soufflet.

Il est bien entendu clair que l'échauffement de l'eau sera d'autant plus important que le volume du soufflet sera augmenté.

Compte tenu du fait que l'eau chaude distribuée par l'appareil conforme à l'invention est avant tout destinée à la consommation, il n'est pas envisageable d'y adjoindre un antigel ; pour pouvoir néanmoins permettre à la chambre de chauffage de répondre à une éventuelle dilatation consécutive à une congélation de l'eau qui y est contenue, il est avantageux, conformément à l'invention, d'adjoindre à la tige coulissante un ressort compensateur.

Il est par ailleurs nécessaire, conformément à l'invention, d'équiper le cylindre interne et le cylindre externe d'orifices coopérant avec une trappe pour permettre l'introduction de l'élément de cloisonnement et du soufflet dans la chambre de chauffage, ainsi que le nettoyage de celle-ci. On peut, à titre d'exemple, envisager de fixer les cylindres par bridage à la trappe.

Par ailleurs, il est bien connu que dans les pays chauds ou à ensoleillement important dans lesquels une utilisation économiquement viable de l'énergie solaire peut être envisagée, il est tout aussi important, sinon plus de pouvoir disposer d'appareils de réfrigération ou de climatisation que d'appareils de chauffage.

Or, on s'est aperçu, conformément à l'invention, qu'une cellule largement similaire à la cellule de chauffage du chauffe-eau susmentionné pouvait être utilisée pour le refroidissement ou la climatisation en ne subissant que des modifications mineures.

Un second objet de l'invention est de proposer un appareil de refroidissement ou de climatisation se composant d'une telle cellule de refroidissement.

Cette cellule ne se distingue en fait de la cellule de chauffage susmentionnée que par la configuration du cylindre interne :

En effet, et selon une autre caractéristique de l'invention, ce volume (cylindre), qui définit à sa partie interne une chambre de refroidissement, porte sur sa face externe un revêtement en un matériau absorbant l'humidité, notamment en feutrine, et coopère avec une réserve d'eau munie d'orifices de ruissellement pour permettre l'humidification du revêtement absorbant, notamment de la feutrine.

Il est clair que la double paroi susmentionnée créée, d'une part, entre le cylindre externe et le cylindre interne, et, d'autre part, entre la paroi transparente de la cellule de refroidissement et le cylindre externe, provoque une évaporation continue de l'eau accumulée à la surface de la feutrine par circulation d'air avec le ventilateur, qui, compte tenu du caractère endothermique de cette réaction, entraîne un refroidissement par effet de pompe à chaleur du volume interne de la chambre de refroidissement, et en particulier de l'eau qui y a été introduite par la conduite de refroidissement. On peut également supprimer cette double enveloppe pour permettre une évaporation à l'air libre. Ce refroidissement est bien entendu d'autant plus efficace que le volume de la chambre de refroidissement est plus faible, et peut être réglé en agissant sur les moyens permettant de faire varier la capacité de la chambre qui ont une configuration similaire à celle des moyens correspondants dans le cas du chauffe-eau.

Conformément à l'invention, il est possible de soutirer l'eau refroidie après l'avoir transférée dans le réservoir d'eau froide, ou encore de récupérer de l'air froid par la conduite d'évacuation, pour l'utiliser ensuite dans un but quelconque.

Selon une autre caractéristique de l'invention permettant d'augmenter l'efficacité du refroidissement, le cylindre interne de l'appareil comporte une extrémité conique coopérant avec l'extrémité circulaire plane correspondante du cylindre externe pour définir une chambre d'aération dans laquelle est monté un ventilateur susceptible de favoriser l'évaporation de l'eau imbibant la feutrine. Ce ventilateur peut, selon les cas, être commandé par un petit moteur notamment électrique, ou encore à l'aide de panneaux solaires.

La cellule constitutive du chauffe-eau solaire ou encore de l'appareil de refroidissement ou de climatisation qui fait l'objet de l'invention peut bien entendu avoir une configuration quelconque sans pour cela sortir du cadre de cette dernière, le seul impératif étant de chercher à utiliser l'énergie solaire de manière optimale.

A cet effet, et conformément à la configuration la plus fréquente de l'invention, la cellule comporte une paroi courbe, de préférence à section parabolique, transparente au rayonnement solaire, ainsi que deux parois rectilignes, de préférence perpendiculaires, portant un revêtement réfléchissant ce rayonnement.

La paroi courbe est de préférence montée mobile sur les parois rectilignes et fait donc office de couvercle pour permettre d'accéder à la partie interne de la cellule.

Selon une variante de l'invention, la cellule comporte une paroi transparente au rayonnement solaire essentiellement plane mais munie d'échelons, du type lentille de Fresnel de manière à obtenir une focalisation linéaire du rayonnement, ainsi qu'une paroi courbe portant un revêtement réfléchissant ce rayonnement.

Cette configuration peut, dans certains cas particuliers, présenter l'avantage de permettre à l'appareil de fonctionner en thermo-siphon, le réservoir d'eau étant alors situé en partie haute de l'appareil, ce qui peut augmenter la capacité de celui-ci.

Indépendamment de la nécessité pour les utilisateurs de pouvoir disposer d'eau chaude ou froide, ou encore d'air frais pouvant être utilisé pour la climatisation, on se heurte, dans les zones chaudes ou tropicales, à un manque crucial d'eau douce qui tend à s'étendre de plus en plus.

Pour remédier à ces problèmes, on a depuis longtemps eu l'idée de dessaler l'eau de mer ; la majeure partie des installations proposées jusqu'à présent dans ce but sont cependant particulièrement sophistiquées, et, on n'a encore jamais proposé à ce jour d'appareil de dessalement de l'eau de mer qui puisse être proposé à des particuliers (habitation individuelle, campeurs, plaisanciers) dans des conditions économiquement viables.

Un troisième but de l'invention est de proposer un tel appareil.

Conformément à l'invention, celui-ci est caractérisé en ce qu'il est constitué par l'association d'une cellule de chauffage et d'une cellule de refroidissement du type susmentionné, les conduites d'évacuation de ces deux cellules étant mises en communication de manière à introduire la vapeur produite dans la chambre de chauffage dans la chambre de refroidissement qui joue alors le rôle de condenseur. L'eau dessalée peut ainsi être récupérée directement en manoeuvrant le robinet du réservoir d'eau froide ; pour augmenter la capacité de celui-ci, il est avantageux, selon une autre caractéristique de l'invention, de le mettre en communication avec le réservoir d'eau froide de la cellule de refroidissement, en fermant bien entendu la vanne reliant ce réservoir à la chambre de chauffage.

L'appareil conforme à l'invention peut, bien entendu, être muni d'éléments autres, tels que par exemple des indicateurs de niveau dans les différentes chambres ou réservoirs sans pour cela sortir du cadre de l'invention.

En conclusion, l'invention permet de proposer un appareil mixte constitué par l'association de deux cellules pouvant être notamment rassemblées dans une mallette, et pouvant être utilisées soit isolément pour le chauffage ou la réfrigération, soit de manière combinée pour le dessalement de l'eau de mer. En fonction de son dimensionnement, cet appareil peut convenir soit comme source d'énergie principale pour une villa ou un ensemble d'habitations, soit comme source d'énergie principale ou de secours pour des utilisateurs tels que des campeurs ou des plaisanciers.

Les caractéristiques de l'appareil qui fait l'objet de l'invention seront décrites plus en détail en se référant aux dessins annexés dans lesquels :
- la figure 1 est une vue en perspective schématique représentant un appareil conforme à l'invention.
- la figure 2 est une coupe transversale de l'appareil représenté sur la figure 1.
- la figure 3 est un schéma représentant une variante de l'invention.
- La figure 4 est une vue schématique d'un autre mode de réalisation d'un appareil solaire conçu notamment pour travailler à poste fixe.

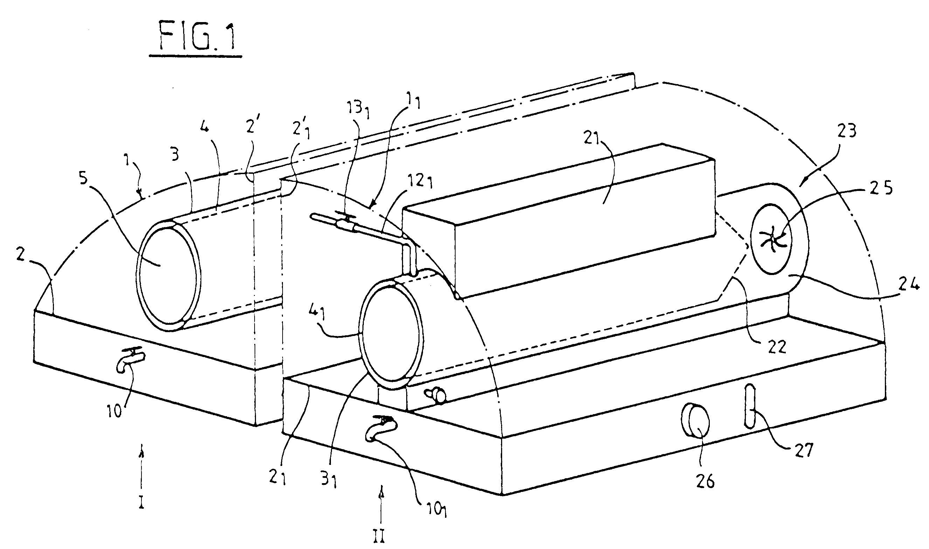

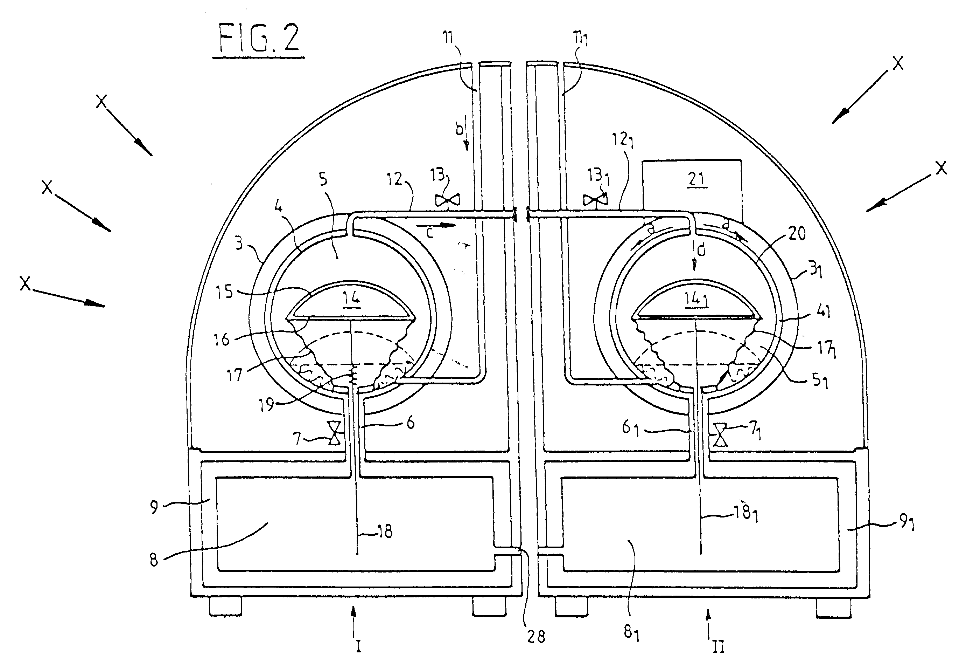

Selon les figures 1 et 2, l'appareil est constitué par l'association de deux cellules I et II qui peuvent être utilisées de manière indépendante pour le chauffage ou la réfrigération de l'eau, et de manière combinée pour le dessalement de l'eau de mer.

La cellule I qui correspond à un chauffe-eau solaire comporte une paroi 1 transparente au rayonnement solaire qui a une section parabolique, ainsi que deux parois planes 2 et 2′ perpendiculaires l'une à l'autre et qui sont revêtues d'un revêtement réfléchissant.

De manière non représentée sur les figures, la paroi transparente 1 est articulée sur l'une des parois planes 2, 2′ et constitue ainsi un couvercle permettant d'accéder à l'intérieur de la cellule.

Selon les figures 1 et 2, deux enveloppes, par exemple deux cylindres concentriques 3, 4 d'axe longitudinal sont montés à l'intérieur de la cellule I : le cylindre externe 3 est constitué d'une matière plastique transparente, et le cylindre interne 4 est constitué ou revêtu d'un revêtement 4′ absorbant le rayonnement solaire, et définit à sa partie interne une chambre de chauffage 5.

Selon la figure 2, une conduite de chauffage 6 munie d'une vanne 7 commandable de l'extérieur permet de relier la chambre de chauffage 5 à un réservoir d'eau chaude 8 situé à la partie inférieure de la cellule 1, et portant sur sa périphérie un revêtement isolant 9. Selon la figure 1, un robinet 10, monté à l'extérieur du réservoir 8, permet de soutirer l'eau contenue dans celui-ci.

Selon la figure 2, la chambre de chauffage 5 est par ailleurs reliée à une conduite d'alimentation 11 en eau à chauffer qui débouche à sa partie inférieure et est munie d'organes de fermeture non représentés, ainsi qu'à une conduite d'évacuation 12 débouchant à sa partie supérieure et munie d'une soupape de sécurité 13. Comme il sera décrit plus en détail dans la suite de cet exposé, cette conduite 12, qui permet d'évacuer vers l'extérieur la vapeur produite dans la chambre de chauffage 5, débouche, au niveau de la paroi plane 2′ de la cellule I et peut le cas échéant être mise en communication avec une conduite similaire de la cellule de refroidissement II dans le cas où l'appareil est utilisé pour le dessalement de l'eau de mer.

Il est clair que, si la cellule I est exposée à un rayonnement solaire schématisé par les flèches X, il se crée un double effet de serre, d'une part, entre les deux parois transparentes 1 et 3, et, d'autre part, entre la paroi transparente 3 et la paroi absorbante 4 ; il en résulte un échauffement rapide de l'eau contenue dans la chambre de chauffage 5, qui est d'autant plus efficace que le volume de cette chambre est plus faible.

Un dispositif particulier permet de contrôler cet échauffement en faisant varier le volume de la chambre 5 : celui-ci est constitué par un élément de cloisonnement longitudinal 14 à section en forme de lunule comportant une face courbe 15 ainsi qu'une face plane 16 sur laquelle est fixé un soufflet 17 mobile entre une position déployée correspondant au volume minimal de la chambre 5, représentée en trait plein sur la figure 2, et une position rétractée correspondant au volume maximum de la chambre 5, représentée en pointillés sur cette même figure. Une tige coulissante 18 manoeuvrable de l'extérieur est fixée à la paroi 16 de l'élément de cloisonnement 14 pour permettre d'effectuer ce déplacement du soufflet 17.

Un ressort 19 est monté sur la tige 18 de façon à donner à l'ensemble constitué par l'élément de cloisonnement 14 et le soufflet 17 l'élasticité nécessaire pour permettre à la chambre 15 de compenser toute expansion pouvant être consécutive à une congélation de l'eau qui y est contenue, et ainsi éviter de devoir y ajouter un antigel dans le but d'empêcher tout endommagement accidentel des différentes conduites.

Selon les figures 1 et 2, la configuration de la cellule de refroidissement II est largement similaire à celle de la cellule de chauffage I. Celle-ci est en effet constituée par l'association de deux parois planes perpendiculaires 2₁, 2′₁ portant un revêtement réfléchissant et d'une paroi courbe à section en forme de parabole 1₁ qui est articulée sur les parois planes et fait donc office de couvercle.

La cellule II porte à sa partie interne un ensemble de deux cylindres concentriques fermés 3₁, 4₁, à savoir un cylindre externe 3₁ en une matière plastique transparente au rayonnement solaire et un cylindre interne 4₁ définissant à sa partie interne une chambre de refroidissement 5₁ dont on peut faire varier le volume grâce à un dispositif constitué par l'association d'un élément de cloisonnement 14₁ d'un soufflet 17₁ et d'une tige coulissante 18₁ ayant une configuration similaire à celle des éléments correspondants 14, 17, 18 permettant de faire varier le volume de la chambre de chauffage 15 de la cellule de chauffage I.

Une conduite de refroidissement 6₁ munie d'une vanne 7₁ commandable de l'extérieur permet de relier la chambre de refroidissement 5₁ à un réservoir d'eau froide 8₁ dont les parois sont revêtues d'un isolant 9₁.

La chambre de refroidissement 5₁ est par ailleurs reliée à l'extérieur, d'une part, par une conduite d'alimentation 11₁ munie d'organes de fermeture et débouchant à sa partie inférieure, et, d'autre part, par une conduite d'évacuation d'air froid 12₁ munie d'une soupape d'arrêt 13₁ et susceptible d'être raccordée à la conduite d'évacuation 12 de la cellule de chauffage 1.

Un robinet 10₁ (figure 1) permet par ailleurs de soutirer l'eau contenue dans le réservoir d'eau froide 8₁.

Selon la figure 2, le cylindre interne 4₁ de la cellule de refroidissement 2 a une configuration différente de celle du cylindre interne 4 de la cellule de chauffage I. Il est en effet revêtu sur sa face externe d'une feutrine 20 susceptible d'absorber l'humidité et coopère avec une réserve 21 munie d'orifices de ruissellement non représentés qui permettent d'humidifier la feutrine tel que représenté schématiquement par les flèches a.

Il est clair, compte tenu de cette configuration, que l'eau absorbée par la feutrine va s'évaporer sous l'effet du rayonnement solaire X entraînant un refroidissement du volume interne de la chambre de refroidissement 5₁, et en particulier de l'eau qui y a été introduite par la conduite d'alimentation 11₁. Cette eau refroidie peut ensuite être transférée dans le réservoir d'eau froide 8₁ en ouvrant la soupape 7₁ et être distribuée par le robinet 10₁. La variation du volume de la chambre de refroidissement 5₁, en manoeuvrant le bouton 26, permet de maîtriser les caractéristiques du refroidissement.

Selon la figure 1, le cylindre interne 4₁ est muni d'une extrémité conique 22 coopérant avec l'extrémité plane correspondante 23 du cylindre externe 3₁ pour définir une chambre d'aération 24 dans laquelle est monté un ventilateur 25 pouvant être alimenté par un moteur annexe ou encore par des panneaux solaires. Cette configuration est de nature à augmenter l'efficacité de l'évaporation au niveau de la feutrine 20. Une fenêtre 27 permet de vérifier à tout moment le niveau d'eau dans le réservoir 8₁.

Selon la figure 2, on peut associer les cellules I et II en plaçant côte à côte les parois 11 et 11₁ et en mettant en communication les conduites d'évacuation 12 et 12₁. L'appareil peut être utilisé pour le dessalement de l'eau de mer. Il fonctionne alors de la façon suivante :

On introduit l'eau de mer à dessaler selon la flèche b dans la conduite d'alimentation 11 de la chambre de chauffage 5. Celle-ci est alors échauffée à ce niveau, et, la vapeur obtenue s'échappe selon la flèche c par les conduites d'évacuation 12, 12₁ (les soupapes d'arrêt 13 et 13₁ ayant été préalablement ouvertes, et parvient, selon la flèche d, dans la chambre de refroidissement 5₁ qui fait alors office de condenseur. L'eau dessalée ainsi obtenue peut alors être récupérée dans le réservoir 8₁ en ouvrant la vanne 7₁ puis soutirée par le robinet 10₁.

Le réservoir 8₁ peut être mis en communication avec le réservoir 8 en ouvrant une conduite 28 de manière à doubler sa capacité ; il est bien entendu essentiel de maintenir fermée la soupape 7.

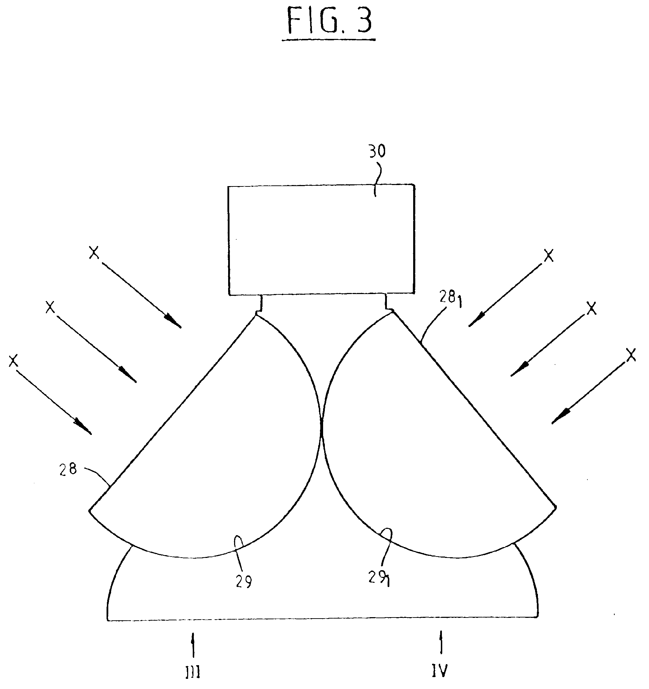

Selon la figure 3, les cellules I et II telles que représentées sur les figures 1 et 2 sont remplacées par des cellules III et IV constituées chacune par une paroi 28, 28₁ transparente au rayonnement solaire X et une paroi 29, 29₁ à section en forme d'arc de parabole portant un revêtement réfléchissant le rayonnement.

Ces cellules sont munies à leur partie interne d'un système de tubes concentriques similaires à ceux dont sont respectivement munies les cellules I et II et qui pour cette raison n'ont pas été représentés sur la figure.

Les faces planes transparentes 28, 28₁ présentent la particularité de comporter des échelons du type lentille de Fresnel de façon à permettre une focalisation linéaire du faisceau lumineux le long de l'axe longitudinal des chambres de chauffage 5 et de réfrigération 5₁.

Conformément à cet appareil, les réservoirs 8, 8₁ sont remplacés par un réservoir supérieur 30 permettant à l'appareil de fonctionner en thermosiphon.

Suivant une variante non représentée, dans le cas d'un appareil solaire (chauffe-eau) d'une certaine importance, à poste fixe, il est souhaitable de protéger l'absorbeur contre le gel en évacuant le contenu de l'absorbeur dans le réservoir lorsque la température diminue de façon importante après la disparition du soleil, (ce qui se détecte par une sonde de température).

Comme normalement la circulation d'eau est ouverte, c'est-à-dire que l'eau puisée dans le réservoir est remplacée par de l'eau nouvelle réchauffée dans l'absorbeur, il est nécessaire de prévoir dans le réservoir un détecteur de niveau qui permet de laisser libre dans le réservoir un volume suffisant pour recevoir l'eau de l'absorbeur. La commande assure à ce moment la fermeture de la vanne d'arrivée d'eau de l'absorbeur.

Suivant une autre variante, le réservoir de stockage est au-dessus de l'absorbeur et la liaison se fait par un tuyau d'eau froide et un tuyau d'eau chaude muni chacun d'un clapet anti-retour pour ne permettre la circulation de l'eau que dans un sens.

Il convient également de remarquer que l'absorbeur peut être protégé par un rideau isolant, par exemple à enrouleur ou par des écrans mobiles mis en place par une commande à partir d'une sonde de température.

De manière générale, les enveloppes s'entourant l'une l'autre, et qui dans un cas sont des cylindres coaxiaux, permettent de modifier le volume de liquide à chauffer dans l'absorbeur. Cela permet d'uniformiser la fabrication des installations, notamment de production d'eau chaude sans avoir à limiter sa capacité à la situation d'ensoleillement la plus défavorable. Même une installation de grande capacité pourra produire de l'eau suffisamment chaude (en quantité plus réduite), grâce à la réduction du volume de l'absorbeur. D'ailleurs l'enveloppe intérieure qui délimite la capacité de l'absorbeur peut être réalisée de diverses façons ; elle peut être constituée par un soufflet ou plus généralement par un moyen extensible ou de volume variable commandé soit automatiquement soit manuellement.

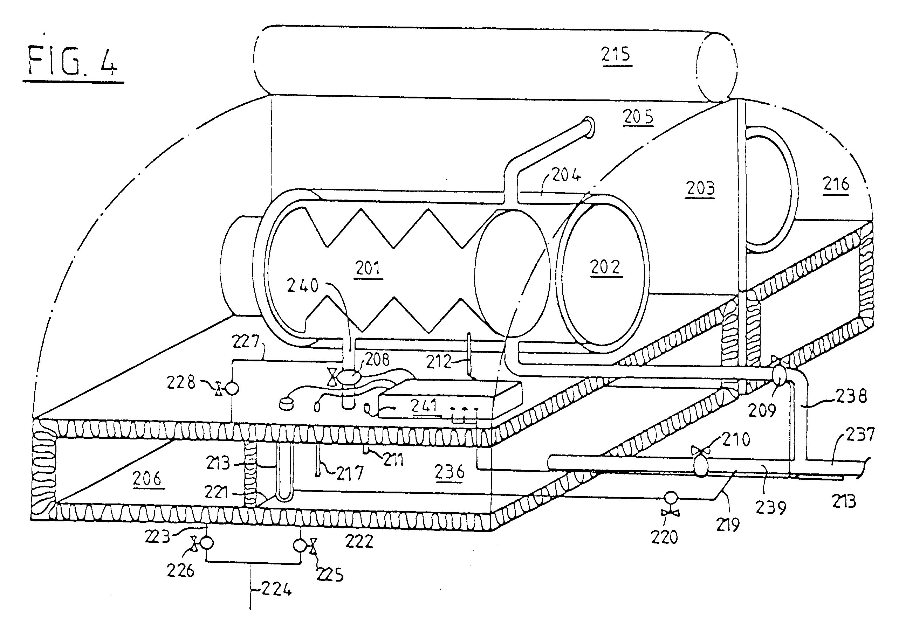

La figure 4 montre un appareil solaire du type de celui décrit ci-dessus mais destiné plus particulièrement à une installation à poste fixe et équipée pour cette raison de moyens particuliers, complémentaires.

Cet appareil solaire se compose de la manière précédente d'une partie formant un chauffe-eau solaire et d'une partie 216 formant un refroidisseur. Seule la partie de l'appareil constituant un chauffe-eau solaire sera examinée ci-après :

Ce chauffe-eau solaire se compose d'un absorbeur 202 formant un réservoir de chauffage solaire de l'eau. A l'intérieur de cet absorbeur se trouve un moyen de règlage de capacité de l'absorbeur 201 ; ce moyen 201 est constitué schématiquement dans cet exemple par un élément de volume variable par exemple un soufflet. En déployant plus ou moins ce moyen 201, on modifie la capacité de l'absorbeur 202 et, par suite, on adapte le volume d'eau à réchauffer à la puissance de l'énergie solaire disponible à l'instant donné.

Comme précédemment cet absorbeur 202 se trouve devant un réflecteur 203 constitué par exemple par une paroi verticale et une paroi horizontale bien que toute autre forme de réflecteur et, en particulier, un réflecteur cylindrique de section parabolique puisse être envisagé. L'ensemble est protégé par un capot 205 et peut être recouvert d'un rideau de protection 215 pour éviter, par exemple, la surchauffe lorsque l'appareil n'est pas utilisé (par exemple pendant les périodes de vacances ou d'absence des utilisateurs).

L'absorbeur-réservoir 202 est entouré d'une enveloppe 204 créant autour de lui un effet de serre. Sous l'absorbeur 202 se trouve un réservoir de stockage constitué de deux volumes 206, 236 entourés d'une paroi isolante 207 et séparés par une cloison 221 elle-même, de préférence, isolante pour des raisons évoquées ultérieurement.

Le chauffe-eau solaire est alimenté par une canalisation 237 qui est reliée par une conduite 238 munie d'une électrovanne 209 au volume de l'absorbeur 202. Cette canalisation 237 est également reliée par une première conduite 239 munie d'une électrovanne 210 au volume 236 du réservoir et par une seconde canalisation 219 munie d'une électrovanne 220 au second volume 206 du réservoir de stockage.

Le volume de l'absorbeur 202 est relié par une première canalisation 240 munie d'une électrovanne 208 au volume de stockage 236 et par une seconde canalisation 227 munie d'une électrovanne 228 au second volume de stockage 206.

Chacun des deux volumes de stockage 236, 206 comporte, en sortie, une conduite 222, 223 équipée chacune d'une électrovanne 225, 226 et communiquant avec une conduite de sortie commune 224.

La canalisation d'arrivée d'eau 237 est munie d'une sonde de température 213. De même, l'absorbeur 202 est muni d'une sonde de température 212 et le réservoir 236 est muni d'une sonde de température 214. Enfin, ce réservoir 236 est équipé d'une résistance électrique 213. Les différentes sondes et électrovannes sont reliées à un boîtier de commande 241 qui gère le fonctionnement de l'appareil.

Ce fonctionnement a pour but d'éviter l'un des principaux inconvénients des chauffe-eau solaires à poste fixe, connus.

En effet, la plupart des chauffe-eau solaires fixes comportent, en plus de l'absorbeur, une résistance électrique qui chauffe le réservoir d'eau en attente lorsque la température de l'eau est inférieure à un seuil déterminé.

Or, il peut arriver que la réserve d'eau chauffée soit complètement épuisée par l'utilisation successive et à intervalle réduit de l'équipement sanitaire de la maison, par la cuisine, la lessive, etc...

Dans ces conditions, comme l'eau du réservoir est pratiquement à la température de l'eau de la conduite d'arrivée, la résistance se met immédiatement en route pour chauffer cette réserve d'eau. Dans ces conditions, l'énergie solaire qui est fournie à partir de ce moment ou par exemple le lendemain ne sera pas utilisée pour chauffer la réserve d'eau puisque l'eau de cette réserve aura déjà été mise à la température de soutirage.

Le mode de réalisation représenté à la figure 4 a pour but d'éviter cet inconvénient tout en permettant, en cas de besoin, d'obtenir très rapidement une quantité d'eau chaude, sans pour autant chauffer une quantité excessive d'eau par anticipation.

La gestion, assurée par l'électronique de gestion 241, les sondes de température et les électrovannes d'arrivée et de sortie, permet le fonctionnement suivant :

On suppose tout d'abord que la capacité totale des deux parties 236, 206 du réservoir de l'appareil, est supérieure à la capacité de l'absorbeur, quelle que soit, par ailleurs, la capacité règlée dans cet absorbeur.

A la fin d'une journée d'ensoleillement, le volume d'eau chaude préparé par l'absorbeur est transféré d'abord dans le volume de stockage 236 si celui-ci a encore de la place disponible ou dans le volume 206. Le volume d'eau ainsi soutiré dans l'absorbeur 202 peut être remplacé par de l'eau de la canalisation 237 par ouverture de l'électrovanne 209 ; ce volume peut également rester vide si la température extérieure ou le rayonnement nocturne vers la voûte céleste risquent de faire geler l'eau de l'absorbeur 202 car cette eau sera le lendemain à une température inférieure à celle de la canalisation ; il est préférable dans ce cas de ne remplir l'absorbeur 202 qu'après l'apparition du soleil lorsque la sonde 212 de l'absorbeur aura détecté dans l'absorbeur une température supérieure à celle de l'eau de la canalisation d'alimentation 237 (cette dernière étant détectée par la sonde 213).

Si, dans les conditions de fonctionnement décrites ci-dessus, l'eau chaude de l'appareil est épuisée et qu'une demande d'eau chaude existe, l'utilisateur peut demander au circuit de gestion 241 (par l'intermédiaire d'un appareil relié à ce circuit de gestion 241) de lui préparer une certaine quantité d'eau chaude à une température donnée (par exemple 10, 20 ou 40 litres d'eau chaude à une température de 50°). A ce moment, le circuit de gestion 241 commande la mise en oeuvre de la résistance 213 quine chauffera que la quantité nécessaire introduite dans le volume 236 à partir de la conduite d'arrivée 237, de la conduite 239 et par l'électrovanne 210.

On évite ainsi de chauffer avec la résistance 213 le total du contenu d'un réservoir de chauffe-eau solaire habituel et qui, dans ce cas, serait le contenu total des réservoirs 236 et 206.

La conduite 219 et l'électrovanne 220 qui alimentent le volume de stockage 206 permettent par exemple de modifier la température de l'eau contenue dans ce réservoir si cette température était, par exemple, trop chaude pour l'utilisation demandée.

Ainsi, l'appareil solaire peut comporter deux réservoirs dont l'un (abstraction faite de la résistance 213 assurant le chauffage d'appoint, ponctuel) peut contenir l'eau la plus chaude fournie par l'absorbeur 202 et l'autre le réservoir 206, l'eau la moins chaude. Le prélèvement de l'eau à la température souhaitée se fait toujours sur demande et par commande par le circuit de gestion 241 à l'aide des conduites 222, 223 des électrovannes 225, 226 et de la conduite de sortie 224.

Suivant une autre variante non représentée, lorsque le réservoir de stockage est placé au-dessus de l'absorbeur, on peut utiliser le déploiement de l'enveloppe interne qui réduit ou augmente la capacité de l'absorbeur pour refouler l'eau de l'absorbeur vers le réservoir de stockage ou lui permettre de retourner du réservoir dans l'absorbeur.

La commande du mouvement de déploiement ou de rétraction de l'enveloppe interne de l'absorbeur et de l'ouverture de communication peut être gérée soit manuellement soit par le circuit de gestion de l'installation.

Enfin, suivant une variante non représentée, l'enveloppe interne est constituée par un cylindre percé par des supports se déplaçant dans des fentes radiales et donnant un cylindre intérieur de diamètre réglable.

## Revendications

1. Appareil solaire tel que chauffe-eau solaire caractérisé en ce qu'il se compose d'une cellule (I) partiellement transparente au rayonnement solaire qui comporte à sa partie interne :
- un ensemble de deux enveloppes s'entourant l'une l'autre fermées créant entre elles un effet de serre, à savoir une enveloppe externe (3) en un matériau, notamment une matière plastique, transparente au rayonnement solaire et une enveloppe interne (4) en un matériau absorbant ce rayonnement et définissant à sa partie interne une chambre de chauffage (5),
- une conduite d'alimentation (11) de la chambre de chauffage (5) en eau à chauffer,
- des moyens (14, 17) permettant de faire varier la capacité de la chambre de chauffage (5),
- un réservoir d'eau chaude (8) revêtu sur sa périphérie d'un matériau isolant (9) et relié à la chambre de chauffage (5) au moyen d'une conduite de chauffage (6) munie d'une vanne (7) commandable de l'extérieur,
- un robinet (10) de soutirage d'eau chaude monté à la partie externe du réservoir d'eau chaude (8), et
- une conduite (12) d'évacuation de la vapeur produite le cas échéant dans la chambre de chauffage (5), munie de préférence d'une soupape d'arrêt (13).

2. Appareil solaire tel qu'appareil de refroidissement ou de climatisation par l'énergie solaire, caractérisé en ce qu'il se compose d'une cellule (II) partiellement transparente au rayonnement solaire qui comporte à sa partie interne :
- un ensemble de deux enveloppes s'entourant l'une l'autre fermées, à savoir une enveloppe externe (3₁) en un matériau, notamment une matière plastique, transparente au rayonnement solaire et une enveloppe interne (4₁) portant sur sa face externe un revêtement (20) en un matériau absorbant l'humidité, notamment en feutrine et définissant à sa partie interne une chambre de refroidissement (5₁),
- une réserve d'eau (21) munie d'orifices de ruissellement et coopérant avec l'enveloppe interne (4₁) pour permettre l'humidification du revêtement absorbant (20), notamment de la feutrine,
- une conduite d'alimentation (11₁) de la chambre de refroidissement (5₁)en eau à refroidir,
- des moyens (14₁, 17₁)permettant de faire varier la capacité de la chambre de refroidissement (5₁),
- un réservoir d'eau froide (8₁) revêtu sur sa périphérie d'un matériau isolant (9₁) et relié à la chambre de refroidissement (5₁) au moyen d'une vanne (7₁) commandable de l'extérieur,
- un robinet (10₁) de soutirage d'eau froide monté à la partie externe du réservoir d'eau froide (8₁), et
- une conduite (12₁) d'évacuation d'air froid de la chambre de refroidissement (5₁) munie de préférence d'une soupape d'arrêt (13₁).

3. Appareil solaire selon l'une quelconque des revendications 1 et 2, caractérisé en ce que les enveloppes (3, 4, 3₁, 4₁) sont deux cylindres.

4. Appareil de refroidissement ou de climatisation selon la revendication 3, caractérisé en ce que le cylindre interne (4₁) comporte une extrémité conique (22) coopérant avec l'extrémité circulaire plane (23) correspondante du cylindre externe (3₁) pour définir une chambre d'aération (24) dans laquelle est monté un ventilateur (25) notamment mû par l'énergie solaire.

5. Appareil selon l'une quelconque des revendications 1 à 4, caractérisé en ce que les moyens permettant de faire varier la capacité de la chambre de chauffage (5)/de refroidissement (5₁) sont constitués par un élément de cloisonnement (14, 14₁) s'étendant longitudinalement dans celle-ci et sur lequel est fixé un soufflet (17, 17₁) coopérant avec une tige coulissante (18, 18₁) manoeuvrable de l'extérieur pour faire varier le volume de ce dernier.

6. Appareil selon la revendication 5, caractérisé en ce que la tige coulissante (18, 18₁) est munie d'un ressort compensateur (19, 19₁) permettant d'éviter toute obligation d'ajouter de l'antigel.

7. Appareil selon l'une quelconque des revendications 5 et 6, caractérisé en ce que le cylindre interne (4, 4₁) et le cylindre externe (3, 3₁) sont munis d'un orifice coopérant avec une trappe pour permettre l'introduction de l'élément de cloisonnement (14, 14₁) et du soufflet (17, 17₁) dans le cylindre interne (4, 4₁).

8. Appareil selon l'une quelconque des revendications 1 à 7, caractérisé en ce que la cellule (I, II) comporte une paroi courbe (1, 1₁) de préférence à section parabolique transparente au rayonnement solaire ainsi que de parois rectilignes (2, 2′, 2₁, 2′₁) de préférence perpendiculaires portant un revêtement réfléchissant ce rayonnement.

9. Appareil selon l'une quelconque des revendications 1 à 7, caractérisé en ce que la cellule (III, IV) comporte une paroi (28, 28₁) transparente au rayonnement solaire essentiellement plane mais munie d'échelons du type lentille de Fresnel de manière à obtenir une focalisation linéaire du rayonnement, ainsi qu'une paroi courbe (29, 29₁) portant un revêtement réfléchissant ce rayonnement.

10. Appareil de dessalement de l'eau de mer caractérisé en ce qu'il est constitué par l'association d'une cellule de chauffage (I) conforme à la revendication 1 et d'une cellule de refroidissement (II) conforme à la revendication 2, les conduites d'évacuation (12, 12₁) de ces deux cellules étant mises en communication de manière à introduire la vapeur produite dans la chambre de chauffage (5) dans la chambre de refroidissement (5₁) qui joue alors le rôle de condenseur.

11. Appareil de dessalement de l'eau de mer selon la revendication 10, caractérisé en ce que le réservoir d'eau chaude (8) de la cellule de chauffage (I) et le réservoir d'eau froide (8₁) de la cellule de refroidissement (II) sont mis en communication.

## Patentansprüche

1. Solaranlage wie ein Solar-Warmwasserbereiter, dadurch gekennzeichnet, daß diese aus einer für Sonnenstrahlung teilweise durchlässigen Zelle (I) gebildet ist, die in ihrem inneren Bereich umfaßt:
- eine Gruppe aus zwei geschlossenen, einen Treibhauseffekt bewirkenden Gehäusen, deren eines das andere umschließt, nämlich einem äußeren Gehäuse (3) aus einem Werkstoff, insbesondere Kunststoff, der für Sonnenstrahlung durchlässig ist, und einem inneren Gehäuse (4) aus einem Werkstoff, der diese Strahlung absorbiert und in seinem inneren Bereich eine Heizkammer (5) bildet,
- eine Leitung (11) zur Versorgung der Heizkammer (5) mit zu erwärmendem Wasser,
- Mittel (14,17), die eine Änderung der Kapazität der Heizkammer (5) ermöglichen,
- einen Warmwasserbehälter (8), der an seiner Peripherie mit einem isolierenden Material (9) verkleidet und mittels einer Heizleitung (6), die mit einem von außen betätigbaren Ventil (7) versehen ist, mit der Heizkammer (5) verbunden ist,
- einen Warmwasser-Zapfhahn (10), der an dem äußeren Bereich des Warmwasserbehäiters (8) montiert ist,
- und eine Leitung (12) zum Ablassen von in der Heizkammer (5) gegebenenfalls erzeugtem Dampf, die vorzugsweise mit einem Absperrventil (13) versehen ist.

2. Solaranlage wie eine Anlage zum Kühlen oder Klimatisieren durch Solarenergie, dadurch gekennzeichnet, daß diese durch eine für Sonnenstrahlung teilweise durchlässige Zelle (II) gebildet ist, die in ihrem inneren Bereich umfaßt:
- eine Gruppe aus zwei geschlossenen Gehäusen, deren eines das andere umschließt, nämlich einem äußeren Gehäuse (3₁) aus einem Werkstoff, insbesondere einem Kunststoff, der für Sonnenstrahlung durchlässig ist, und einem inneren Gehäuse (4₁), das an seiner Außenfläche eine Verkleidung (20) aus einem die Feuchtigkeit absorbierenden Material, insbesondere aus Filz, trägt und in seinem inneren Bereich eine Kühlkammer (5₁) bildet,
- ein Wasserreservoir (21), das mit Berieselungsöffnungen versehen ist und mit dem inneren Behälter (4₁) zusammenwirkt, um die Befeuchtung der absorbierenden Verkleidung (20), insbesondere des Filzes, zu ermöglichen,
- eine Leitung (11₁) zur Versorgung der Kühlkammer (5₁) mit zu kühlendem Wasser,
- Mittel (14₁,17₁), die eine Änderung der Kapazität der Kühlkammer (5₁) ermöglichen,
- einen Kaltwasserbehälter (8₁), der an seiner Peripherie mit einem isolierenden Material (9₁) verkleidet und mittels eines von außen betätigbaren Ventils (7₁) mit der Kühlkammer (5₁) verbunden ist,
- einen Kaltwasser-Zapfhahn (10₁), der an dem äußeren Bereich des Kaltwasserbehälters (8₁) montiert ist,
- und eine Leitung (12₁) zur Ableitung von Kaltluft aus der Kühlkammer (5₁), die vorzugsweise mit einem Absperrventil (13₁) versehen ist.

3. Solaranlage nach Anspruch 1 oder 2, dadurch gekennzeichnet, daß die Gehäuse (3,4,3₁,4₁) zwei Zylinder sind.

4. Anlage zur Kühlung oder Klimatisierung nach Anspruch 3, dadurch gekennzeichnet, daß das innere Gehäuse (4₁) ein konisches Ende (22) aufweist, das mit dem entsprechenden flachen kreisrunden Ende (23) des äußeren Gehäuses (3₁) zusammenwirkt, um eine Belüftungskammer (24) zu bilden, in der ein insbesondere durch Solarenergie bewegter Ventilator (25) montiert ist.

5. Anlage nach einem der Ansprüche 1 bis 4, dadurch gekennzeichnet, daß die Mittel, die eine Änderung der Kapazität der Heizkammer (5)/Kühlkammer (5₁) ermöglichen, durch ein Unterteilungselement (14,14₁) gebildet sind, das sich in dieser in Längsrichtung erstreckt und an welchem ein Blasebalg (17,17₁) befestigt ist, der mit einer Gleitstange (18,18₁) zusammenwirkt, die zur Änderung des Volumens des letzteren von außen betätigbar ist.

6. Anlage nach Anspruch 5, dadurch gekennzeichnet, daß die Gleitstange (18,18₁) mit einer Ausgleichsfeder (19,19₁) versehen ist, durch welche die Notwendigkeit der Zugabe eines Frostschutzmittels vermieden wird.

7. Anlage nach Anspruch 5 oder 6, dadurch gekennzeichnet, daß der innere Zylinder (4,4₁) und der äußere Zylinder (3,3₁) mit einer Öffnung versehen sind, die mit einer Klappe zusammenwirkt, um das Einsetzen des Unterteilungselements (14,14₁) und des Blasebalgs (17,17₁) in den inneren Zylinder (4,4₁) zu ermöglichen.

8. Anlage nach einem der Ansprüche 1 bis 7, dadurch gekennzeichnet, daß die Zelle (I,II) eine für Sonnenstrahlung durchlässige gekrümmte Wand (1,1₁) mit vorzugsweise parabolischem Querschnitt sowie geradlinige, vorzugsweise senkrechte Wände (2,2′,2₁,2′₁) aufweist, die eine diese Strahlung reflektierende Verkleidung tragen.

9. Anlage nach einem der Ansprüche 1 bis 7, dadurch gekennzeichnet, daß die Zelle (III,IV) eine für Sonnenstrahlung durchlässige, im wesentlichen flache, jedoch mit Stufen in der Art einer Fresnellinse zum Erreichen einer linearen Fokussierung der Strahlung versehene Wand (28,28₁) sowie eine gekrümmte Wand (29,29₁) aufweist, die eine diese Strahlung reflektierende Verkleidung trägt.

10. Anlage zum Entsalzen von Meerwasser, dadurch gekennzeichnet, daß diese durch die Vereinigung einer Heizzelle (I) gemäß Anspruch 1 und einer Kühlzelle (II) gemäß Anspruch 2 gebildet wird, wobei die Abzugsleitungen (12,12₁) dieser beiden Zellen derart in kommunizierende Verbindung gebracht werden, daß der in der Heizkammer (5) erzeugte Dampf in die Kühlkammer (5₁) geleitet wird, die folglich die Funktion eines Kondensators übernimmt.

11. Anlage zum Entsalzen von Meerwasser nach Anspruch 10, dadurch gekennzeichnet, daß der Warmwasserbehälter (8) der Heizzelle (I) und der Kaltwasserbehälter (8₁) der Kühlzelle (II) miteinander kommunizierend verbunden werden.

## Claims

1. A solar apparatus such as a solar water heater characterised in that it is composed of a cell (I) which is partially transparent to solar radiation and which comprises in its internal part:
- an assembly of two closed casings of which one surrounds the other and which create between them a greenhouse effect, namely an external casing (3) of a material, in particular a plastics material, which is transparent to the solar radiation and an internal casing (4) of a material for absorbing said radiation and which defines in its internal part a heating chamber (5),
- a conduit (11) for supplying the heating chamber (5) with water to be heated,
- means (14, 17) which make it possible to vary the capacity of the heating chamber (5),
- a hot water tank (8) which is clad around its periphery with an insulating material (9) and which is connected to the heating chamber (5) by means of a heating conduit (6) provided with a valve (7) which can be controlled from the exterior,
- a tap (10) for drawing off hot water, which is mounted at the external part of the hot water tank (8), and
- a conduit (12) for discharge of the vapour produced if necessary in the heating chamber (5), the conduit preferably being provided with a stop valve (13).

2. A solar apparatus such as an apparatus for cooling or air-conditioning by means of solar energy, characterised in that it is composed of a cell (II) which is partially transparent to solar radiation and which comprises in its internal part:
- an assembly of two closed casings of which one surrounds the other, namely an external casing (3₁) of a material, in particular a plastics material, which is transparent to the solar radiation and an internal casing (4) which on its external face carries a covering (20) of a material for absorbing moisture, in particular baize, and defining in its internal part a cooling chamber (5₁),
- a water reserve (21) provided with trickle flow orifices and co-operating with the internal casing (4₁) to permit humidification of the absorbent covering (20), in particular the baize,
- a conduit (11₁) for supplying the cooling chamber (5₁) with water to be cooled,
- means (14₁, 17₁) which make it possible to vary the capacity of the cooling chamber (5₁),
- a cold water tank (8₁) which is covered around its periphery with an insulating material (9₁) and connected to the cooling chamber (5₁) by means of a valve (7₁) which can be controlled from the exterior,
- a tap (10₁) for drawing off cold water, mounted at the external part of the cold water tank (8₁), and
- a conduit (12₁) for the discharge of cold air from the cooling chamber (5₁), preferably provided with a stop valve (13₁).

3. A solar apparatus according to either one of claims 1 and 2 characterised in that the casings (3, 4, 3₁, 4₁) are two cylinders.

4. A cooling or air-conditioning apparatus according to claim 3 characterised in that the internal cylinder (4₁) comprises a conical end (22) co-operating with the corresponding flat circular end (23) of the external cylinder (3₁) to define an aeration chamber (24) in which there is mounted a fan (25) moved in particular by solar energy.

5. An apparatus according to any one of claims 1 to 4 characterised in that the means for varying the capacity of the heating (5)/cooling (5₁) chamber are formed by a partitioning element (14, 14₁) extending longitudinally in same and on which is fixed a bellows (17, 17′) co-operating with a sliding rod (18, 18′) actuatable from the exterior to vary the volume of the latter.

6. An apparatus according to claim 5 characterised in that the sliding rod (18, 18′) is provided with a compensating spring (19, 19′) making it possible to avoid any need to add antifreeze.

7. An apparatus according to either one of claims 5 and 6 characterised in that the internal cylinder (4, 4₁) and the external cylinder (3, 3₁) are provided with an orifice co-operating with a flap to permit the introduction of the partitioning element (14, 14₁) and the bellows (17, 17₁) into the internal cylinder (4, 4₁).

8. An apparatus according to any one of claims 1 to 7 characterised in that the cell (I, II) comprises a curved wall (1, 1₁), preferably of parabolic section, which is transparent to solar radiation, and straight walls (2, 2′, 2₁, 2′₁), which are preferably perpendicular, bearing a covering which reflects said radiation.

9. An apparatus according to any one of claims 1 to 7 characterised in that the cell (III, IV) comprises a wall (28, 28₁) which is transparent to solar radiation and which is essentially flat but which is provided with graduations of the Fresnel lens type so as to afford linear focusing of the radiation, and a curved wall (29, 29₁) carrying a covering which reflects said radiation.

10. A sea water desalination apparatus characterised that it is formed by the association of a heating cell (I) in accordance with claim 1 and a cooling cell (II) in accordance with claim 2, the discharge conduits (12, 12′) of said two cells being communicated in such a way as to introduce the vapour produced in the heating chamber (5) into the cooling chamber (5₁) which when performs the function of a condenser.

11. A sea water desalination apparatus according to claim 10 characterised in that the hot water tank (8) of the heating cell (I) and the cold water tank (8₁) of the cooling cell (II) are communicated.
